# EUROPEAN PATENT SPECIFICATION

(11) **EP 4 120 118 B1**
(45) Date of publication and mention of the grant of the patent: **12.02.2025**
(21) Application number: 21185461.7
(22) Date of filing: 14.07.2021
(51) Int. Cl.: G06K 7/10, G06K 17/00, G06K 19/07

(54) **AN RFID DETECTION DEVICE AND AN RFID DETECTION SYSTEM**
RFID-DETEKTIONSVORRICHTUNG UND EIN RFID-DETEKTIONSSYSTEM
DISPOSITIF DE DÉTECTION RFID ET SYSTÈME DE DÉTECTION RFID

(43) Date of publication of application: 18.01.2023
(73) Proprietor: E-Tag Rfid Pte. Ltd., 768089 Singapore (SG)
(72) Inventor: LEE, Kheng Soon, Edmund, 768089 Singapore (SG)
(74) Representative: Schweiger, Martin

(56) References cited:
- EP-A1- 2 166 529
- EP-A1- 2 449 196
- EP-B1- 2 449 196
- US-A1- 2015 133 229

## Description

The present application relates to an RFID detection device for detecting a ferromagnetic item and an RFID detection system for detecting an RFID detection device

Most commonly, passive RFID inlays are relatively inexpensive as compared to semi-passive and active RFID inlays, while it utilizes an etching process to develop its antenna design, which commands a high production output to achieve economies of scale.

EP 2449196 A1 relates to a combined electrical article surveillance (EAS)/radio frequency identification (RFID) security tag with EAS and RFID components configured within the tag housing. The disclosed embodiment allows the EAS and RFID components to be housed side by side without impacting the RFID's signal quality, due to a housing design that positions the RFID chip away from the EAS elements.

US 2015133229 A1 discloses waterslide system capable of tracking user performance and providing feedback. The system may incorporate sensors and tags for interaction, enabling modifications to the waterslide based on performance feedback.

EP 2166529 A1 relates to a support system for electronic tags, featuring at least one anchoring profile that can be attached to a supporting structure.

It is an object of the present application to provide an improved RFID detection device and an RFID detection system.

According to a first aspect, an RFID detection device for detecting a ferromagnetic item, which is placed on the RFID detection device, wherein the RFID detection device comprises a housing, an RFID inlay, which is positioned in the housing, a detuning element, which is positioned in the housing, a magnet, which positioned in the housing and configured to move the detuning element and the RFID inlay relative to each other from a first position in which the detuning elements abuts the RFID inlay to a second position in which the detuning element is spaced apart from the RFID inlay or vice versa, and the detuning element being configured to detune the RFID inlay when the detuning element abuts the RFID inlay in the first position, is provided.

The RFID detection device can be an active RFID detection device, a semi-passive RFID detection device, or a passive RFID detection device. The RFID detection device can operate with low frequency (120-150 kHz), high frequency (13.56 MHz), ultra-high frequency (433 MHz, 865-868 MHz for Europe, and 902-928 MHz for North America).

The housing can comprise an upper part and a lower part. The upper part and a lower part can abut.

The ferromagnetic item can be a tool, a screw, a device, or a metallic item. The ferromagnetic item can comprise ferromagnetic material. The ferromagnetic material can also be attached to a tool, a screw, a device, or a metallic item. So, the ferromagnetic item itself can comprise a material different from the ferromagnetic material. In this case, a ferromagnetic material can be attached to the ferromagnetic item to make it detectable.

The detuning element is an element to detune the coil of the RFID inlay. Communication between the RFID and an external RFID-Reader can be interrupted by the detuning element. The detuning element can be moveable in the housing.

In a first position, the detuning element abuts to the RFID inlay. The detuning element can abut to a side of the RFID inlay.

To reach the first position the detuning element can be moved toward the RFID inlay. The movement from the detuning element can be initiated by the ground force or a spring.

In another embodiment, the first position can be reached by moving the RFID inlay towards the detuning element. This movement can also be initiated by the ground force or a spring.

The second position can be reached by moving the detuning element apart from the RFID inlay or by moving the RFID inlay apart from the detuning element. The movement of the RFID inlay or the detuning element can be initiated by the magnet. The magnet can be mounted to RFID inlay or the detuning element depending on the movement.

Through this solution, an RFID detection device is provided, which is easy to use, cheap in production, and can be quickly adapted to several use cases.

According to an embodiment the RFID inlay further comprises a strip aluminium antenna.

The antenna can be etched on the RFID inlay. The antenna can comprise metallic material. In particular the antenna is strip aluminium. The strip aluminium can be attached to the RFID inlay. The strip aluminium can be glued to the RFID inlay.

Through this solution, a cheap antenna can be provided. The antenna can be easily added to the RFID inlay. The antenna improves communication between the RFID inlay and the RFID-Reader.

According to an embodiment the magnet comprises neodymium material.

The magnet can be a neodymium magnet. The neodymium magnet (also known as NdFeB, NIB, or Neo magnet) is a permanent magnet made from an alloy of neodymium, iron, and boron to form the Nd2Fe14B tetragonal crystalline structure.

According to this solution, a field of application and compactness is improved. Due to the magnetic force of the neodymium magnet a size of the magnet can be reduced. This leads to a more compact RFID detection device.

According to an embodiment the detuning element comprises aluminium material.

The detuning element can comprise a material to detune the RFID inlay if the detuning element abuts to the RFID inlay. The detuning element can comprise plastic material, semi-conductive material, and/or metallic material, particularly aluminium material.

Through this solution, the detuning capability of the detuning element can be improved.

According to an embodiment the housing comprises plastic material.

The housing can comprise soft plastic materials, hard plastic materials and/or ABS materials.

Through this solution, housing is provided, which is easy and cheap to manufacture.

According to an embodiment an air gap comprises 1 mm to 6 mm, in particular 3 mm, between the detuning element and the RFID inlay in the second position.

Through this solution, the communication between the RFID inlay and the RFID-Reader can be improved.

According to an embodiment the housing comprises a rectangular basic shape.

The housing can comprise any basic shape, in particular a circular basic shape, a square basic shape, a triangular basic shape, or an oval basic shape.

Through this solution, the RFID detection device better fits the tool and improves the detectability of the RFID inlay.

According to an embodiment the detuning element is attached to a plate.

Through this solution, a thickness of the detuning element can be reduced and at the same time, form stability can be improved. Decreasing a amount of material needed for the detuning element also decreases production costs.

According to an embodiment the plate further comprises a 2 grams weight.

In another embodiment the plate and the magnet can be one piece. In particular, the plate can be a metallic plate. In particular the plate can be a magnetic plate.

Alternatively, or additional the weight or the size of the magnet can be adjusted.

Through this solution, the sensitivity of the RFID detection device can be adjusted to a predetermined sensitivity.

According to a second aspect an RFID detection system for detecting an RFID detection device, which comprises an RFID Reader and the RFID detection device, wherein the RFID reader is configured to communicate with the RFID inlay, is provided.

The RFID detection system comprises the RFID detection system as described above and the RFID Reader. The RFID-Reader can communicate with the RFID inlay of the RFID detection device depending on the relative position of the RFID inlay to the detuning element.

If the RFID-Reader can communicate with the RFID inlay the ferromagnetic item is taken up by the RFID detection device.

Depending on the communication the RFID-Reader can output if a ferromagnetic item is taken up by the RFID detection device.

If there are several RFID detection devices the communication can also contain information to identify the RFID detection device or the RFID inlay.

Embodiments of the application will now be described with reference to the attached drawings, in which
Fig. 1 shows an isometric view of an RFID detection device,
Fig. 2 shows a perspective view of an RFID detection system 3 with the RFID detection device 1 as shown in Fig. 1 and an RFID-Reader,
Fig. 3 shows a perspective view of an RFID detection device with ferromagnetic items.

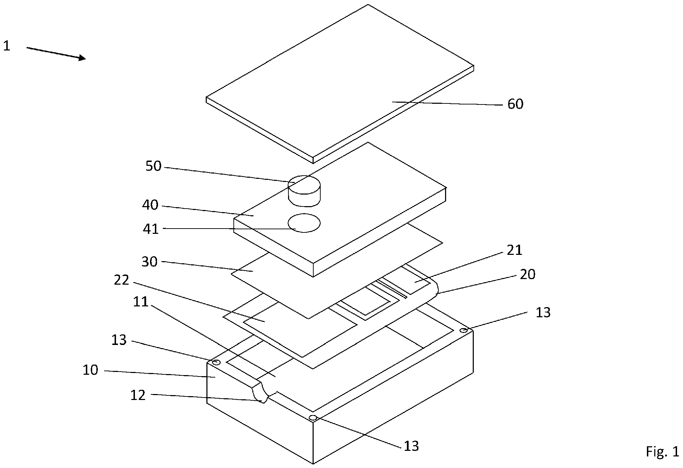

Fig. 1 shows an isometric view of an RFID detection device 1.

The RFID detection device 1 comprises a housing 10. A base 11 of the housing 10 can comprise a rectangular shape. The base 11 of the housing 10 can also comprise a circular shape or a triangular shape. The housing can comprise a grip 12. The grip 12 makes it simple to open the closed housing 10. On each corner of a wall of the housing 10 is a pin holder 13 arranged. The main housing can comprise several pin holders 13.

In the housing 10 is an RFID inlay 20 positioned. The RFID inlay 10 can comprise RFID structures 21. In one embodiment the RFID inlay 20 comprises an antenna 22. The antenna can be an aluminium foil antenna 22, which is arranged on the RFID inlay 20.

Also, in housing 10 a detuning element 30 is arranged. The detuning element 30 can comprise a material to detune the RFID inlay. The detuning element 30 can comprise metal, plastic or semiconductive material. In particular, the detuning element 39 can be an aluminium foil.

The detuning element 30 can be part of an optional plate 40. The detuning element can be integrated into plate 40. Plate 40 is also arranged in housing 10. The detuning element 30 is arranged between the RFID Inlay 20 and the plate 40. Plate 40 can comprise plastic material. Plate 40 can comprise a hole 41 to take up a magnet 50. Alternatively, the magnet 50 on the plate 50. In an embodiment, which is not shown here, the magnet can alternatively be mounted to the RFID inlay 10 or the detuning element 30. For example, magnet 50 can comprise neodymium material. In particular the magnet 50 can comprise ferromagnetic material. Magnet 50 can be glued into hole 41 or to the play 40. The magnet 50 can also be mounted with a press-fit inside hole 41.

The RFID detection device 1 also comprises a top cover 60. The top cover comprises pins, which are not shown here. The pins can be arranged on a bottom side, which is pointing towards the housing 10. The pins can be arranged on each corner of the top cover 60. A position of the pins can correspond to the pin holders 13 of the housing 10. The Pin holders 13 take up the pins of the top cover 60. The top cover 60 closes the housing 10. In an embodiment, not shown here, the housing can comprise a first part and a second part, which can abut. In another embodiment, the housing can be one-piece. For example, the housing 10 can be made by injection moulding.

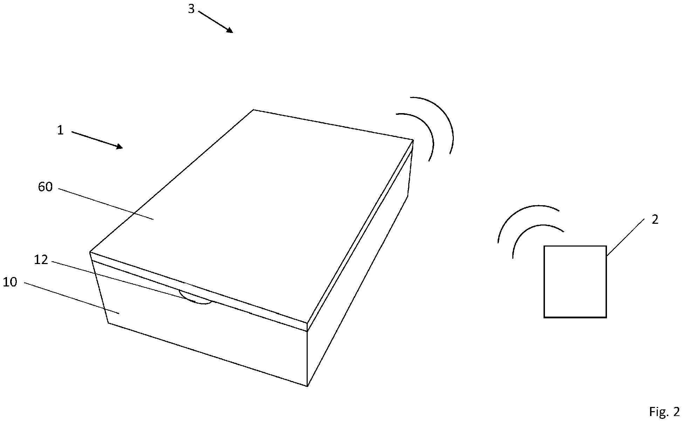

Fig. 2 shows a perspective view of an RFID detection system 3 with the RFID detection device 1 as shown in Fig. 1 and an RFID-Reader 2.

The housing 10 of the RFID detection device 1 is shown in a closed state. The RFID inlay 20, the detuning element 10, the optional plate 40, the magnet 50, which are not shown here, are positioned in the housing 10.

The RFID detection system 3 also comprises the RFID-Reader 2. The RFID-Reader 2 comprises a coil, which is not shown here, to generate a magnetic field. The RFID-Reader 2 can communicate with the RFID detection device 1 depending on a position of the detuning element 30 relatives to the RFID inlay 20.

In a first position, the detuning element 30 abuts the RFID inlay 20. Abuts can also mean, that the detuning element 30 is spaced apart from the RFID inlay 20 with a very small distance. The distance can be 0,1 mm to 0,5 mm, particularly 0,2 mm. If the detuning element 30 and the RFID inlay 20 are in the first position the RFID inlay coil, which is not shown here, is detuned by the detuning element 30. Communication between the RFID-Reader 2 and the RFID detection device 1 is not possible.

In a second position, the detuning element 30 is spaced apart from the RFID inlay 20. For example, the RFID inlay 20 can be moved away from the detuning element 30. Alternately the detuning element 30 can be moved away from the RFID inlay 20. If the detuning element 30 is spaced apart from the RFID inlay 20, the detuning element 30 stops detuning the RFID inlay coil or at least reduces the detuning of the RFID inlay coil. In this case, the RFID inlay 20 can communicate with the RFID-Reader 2. The RFID-Reader 2 can read information from the RFID inlay 20.

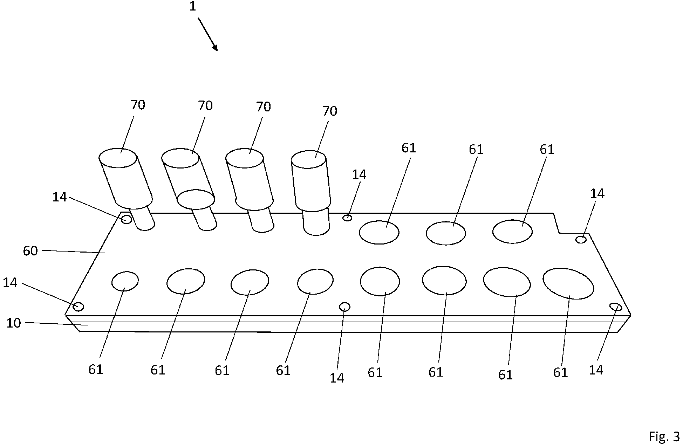

Fig. 3 shows a perspective view of the RFID detection device 1 with ferromagnetic items 70.

Figure 3 shows an embodiment of the RFID detection device 1 as shown in figure 1. This embodiment shows the RFID detection device 1 as a tool holder.

The top cover 60 is mounted with screws 14 on the housing 10. The top cover 60 comprises a recess 61. The recess 61 can take up the ferromagnetic item 70. The ferrimagnetic item 70 can be a tool. The ferromagnetic item 70 can comprise parts with ferromagnetic material. The ferromagnetic item 70 or parts of the ferromagnetic item 70 can be able to magnetize, i.e. stainless steel 304-grade or steel.

The RFID detection device 1 can comprise one single RFID inlay 20, one single detuning element 30, one single optional plate 40 and one single magnet 50. For example the RFID detection device 1 can be configured to detect if a specific amount of tools are taken up in the recess 61.

In another embodiment the RFID detection device 1 can comprise several RFID inlays 20, several foils 30, several plates 40 and several magnets 50. Each RFID inlay 20, each foil 30, each plate 40 and each magnet 50 can correspond to the recess 61 and/or to the ferromagnetic item 70 and can be summarized as a detection unit. The RFID detection device 1 can comprise several detection units. Each detection unit can be separate from other detection units. Each detection unit can detect the ferromagnetic item 70 taken up by the corresponding recess 61.

If the ferromagnetic item 70 is taken away from the recess 61, the RFID detection device 1 or each detection unit is in the first state.

If the ferromagnetic item 70 is taken up by the recess 61, the RFID detection device 1 or each detection unit is in the second position.

In the second position an air gap between the detuning element 30 and the RFID inlay 20 can be 1 mm to 10 mm, particularly 3 mm. Due to the air gap, the RFID inlay 20 can communicate with the RFID reader 2.

The RFID inlay 20 can use energy from the ultra-high frequency waves as a power source. The RFID inlay 20 can transform and deflect the ultra-high frequency. In particular the RFID inlay 20 can be a load for the coil of the RFID-Reader 2. Depending on the load the RFID-Reader 2 can determine information.

## Claims

1. An RFID detection device (1) for detecting a ferromagnetic item (70), which is placed on the RFID detection device (1), wherein the RFID detection device (1) comprises the following components:
- A housing (10),
- A RFID inlay (20), which is positioned in the housing (10),
- A detuning element (30), which is positioned in the housing (10),
- A magnet (50), which positioned in the housing (10) and configured to move the detuning element (30) and the RFID inlay (20) relative to each other from a first position in which the detuning elements (30) abuts the RFID inlay (20) to a second position in which the detuning element (30) is spaced apart from the RFID inlay (20) or vice versa, and
- The detuning element (30) being configured to detune the RFID inlay (20) when the detuning element (30) abuts the RFID inlay (20) in the first position.

2. A RFID detection device (1) according to claim 1, wherein the RFID inlay (20) further comprises a strip aluminium antenna (22).

3. A RFID detection device (1) according to one of the previous claims, wherein the magnet (50) comprises neodymium material.

4. A RFID detection device (1) according to one of the previous claims, wherein the detuning element (30) comprises aluminium material.

5. A RFID detection device (1) according to one of the previous claims, wherein the housing (10) comprises plastic material.

6. A RFID detection device (1) according to one of the previous claims, wherein an air gap comprises 1 mm to 6 mm, in particular 3 mm, between the detuning element (30) and the RFID inlay (20) in the second position.

7. A RFID detection device (1) according to one of the previous claims, wherein the housing (10) comprises a rectangular basic shape.

8. A RFID detection device (1) according to one of the previous claims, wherein the detuning element (30) is attached to a plate (40).

9. A RFID detection device (1) according to claim 8, wherein the plate (40) further comprises a 2 grams weight.

10. A RFID detection system (3) for detecting an RFID detection device (1) according to claim 1 to 9, which system comprises an RFID Reader (2) and the RFID detection device (1) according to claim 1 to 9, wherein the RFID reader (2) is configured to communicate with the RFID inlay (20).

## Patentansprüche

1. RFID-Erfassungsvorrichtung (1) zum Erfassen eines ferromagnetischen Gegenstandes (70), der auf die RFID-Erfassungsvorrichtung (1) angeordnet ist, wobei die RFID-Erfassungsvorrichtung (1) die folgenden Komponenten aufweist:
- Ein Gehäuse (10),
- Ein RFID-Inlay (20), das in dem Gehäuse (10) positioniert ist,
- Ein Verstimmungselement (30), das in dem Gehäuse (10) positioniert ist,
- Einen Magneten (50), der in dem Gehäuse (10) positioniert und ausgebildet ist, das Verstimmungselement (30) und das RFID-Inlay (20) relativ zueinander aus einer ersten Position, in der das Verstimmungselement (30) an dem RFID-Inlay (20) anliegt, in eine zweite Position, in der das Verstimmungselement (30) von dem RFID-Inlay (20) beabstandet ist, zu bewegen oder umgekehrt, und
- Wobei das Verstimmungselement (30) ausgebildet ist, das RFID-Inlay (20) zu verstimmen, wenn das Verstimmungselement (30) in der ersten Position an dem RFID-Inlay (20) anliegt.

2. RFID-Erfassungsvorrichtung (1) nach Anspruch 1, wobei das RFID-Inlay (20) zudem eine Aluminiumstreifenantenne (22) aufweist.

3. RFID-Erfassungsvorrichtung (1) nach einem der vorhergehenden Ansprüche, wobei der Magnet (50) Neodymmaterial umfasst.

4. RFID-Erfassungsvorrichtung (1) nach einem der vorhergehenden Ansprüche, wobei das Verstimmungselement (30) Aluminiummaterial aufweist.

5. RFID-Erfassungsvorrichtung (1) nach einem der vorhergehenden Ansprüche, wobei das Gehäuse (10) Kunststoffmaterial aufweist.

6. RFID-Erfassungsvorrichtung (1) nach einem der vorhergehenden Ansprüche, wobei ein Luftspalt zwischen dem Verstimmungselement (30) und dem RFID-Inlay (20) in der zweiten Position 1 mm bis 6 mm, insbesondere 3 mm, beträgt.

7. RFID-Erfassungsvorrichtung (1) nach einem der vorhergehenden Ansprüche, wobei das Gehäuse (10) eine rechteckige Grundform aufweist.

8. RFID-Erfassungsvorrichtung (1) nach einem der vorhergehenden Ansprüche, wobei das Verstimmungselement (30) an einer Platte (40) befestigt ist.

9. RFID-Erfassungsvorrichtung (1) nach Anspruch 8, wobei die Platte (40) zudem ein 2-Gramm-Gewicht umfasst.

10. RFID-Erfassungssystem (3) zum Erfassen einer RFID-Erfassungsvorrichtung (1) nach Anspruch 1 bis 9, wobei das System einen RFID-Leser (2) und die RFID-Erfassungsvorrichtung (1) nach Anspruch 1 bis 9 umfasst, wobei der RFID-Leser (2) ausgebildet ist, mit dem RFID-Inlay (20) zu kommunizieren.

## Revendications

1. Dispositif de détection RFID (1) pour détecter un article ferromagnétique (70) placé sur le dispositif de détection RFID (1), dans lequel le dispositif de détection RFID (1) comprend les composants suivants :
- Un boîtier (10),
- Un insert RFID (20), arrangé dans le boîtier (10),
- Un élément de désaccord (30), arrangé dans le boîtier (10),
- Un aimant (50), arrangé dans le boîtier (10) et adapté pour déplacer l'élément de désaccord (30) et l'insert RFID (20) l'un par rapport à l'autre, d'une première position dans laquelle l'élément de désaccord (30) est en contact avec l'insert RFID (20) à une deuxième position dans laquelle l'élément de désaccord (30) est espacé de l'insert RFID (20) ou vice-versa, et
- L'élément de désaccord (30) étant adapté pour désaccorder l'insert RFID (20) lorsque l'élément de désaccord (30) est en contact avec l'insert RFID (20) dans la première position.

2. Dispositif de détection RFID (1) selon la revendication 1, dans lequel l'insert RFID (20) comprend en outre une antenne à lame en aluminium (22).

3. Dispositif de détection RFID (1) selon l'une des revendications précédentes, dans lequel l'aimant (50) comprend un matériau en néodyme.

4. Dispositif de détection RFID (1) selon l'une des revendications précédentes, dans lequel l'élément de désaccord (30) comprend un matériau en aluminium.

5. Dispositif de détection RFID (1) selon l'une des revendications précédentes, dans lequel le boîtier (10) comprend un matériau en plastique.

6. Dispositif de détection RFID (1) selon l'une des revendications précédentes, dans lequel un entrefer entre l'élément de désaccord (30) et l'insert RFID (20) dans la deuxième position est compris entre 1 mm et 6 mm, en particulier 3 mm.

7. Dispositif de détection RFID (1) selon l'une des revendications précédentes, dans lequel le boîtier (10) a une forme de base rectangulaire.

8. Dispositif de détection RFID (1) selon l'une des revendications précédentes, dans lequel l'élément de désaccord (30) est fixé à une plaque (40).

9. Dispositif de détection RFID (1) selon la revendication 8, dans lequel la plaque (40) comprend en outre un poids de 2 grammes.

10. Système de détection RFID (3) pour détecter un dispositif de détection RFID (1) selon les revendications 1 à 9, lequel système comprend un lecteur RFID (2) et le dispositif de détection RFID (1) selon les revendications 1 à 9, dans lequel le lecteur RFID (2) est adapté pour communiquer avec l'insert RFID (20).
